# EUROPÄISCHE PATENTSCHRIFT

(11) **EP 3 125 492 B1**
(45) Veröffentlichungstag und Bekanntmachung des Hinweises auf die Patenterteilung: **24.01.2018**
(21) Anmeldenummer: 16180092.5
(22) Anmeldetag: 19.07.2016
(51) Int. Cl.: H04L 29/06, H04L 29/08

(54) **VERFAHREN UND SYSTEM ZUM ERZEUGEN EINES SICHEREN KOMMUNIKATIONSKANALS FÜR ENDGERÄTE**
METHOD AND SYSTEM FOR GENERATING A SECURE COMMUNICATION CHANNEL FOR TERMINALS
PROCEDE ET SYSTEME DE FABRICATION D'UN CANAL DE COMMUNICATION SUR POUR DES TERMINAUX

(30) Priorität: 28.07.2015 DE 102015214267
(43) Veröffentlichungstag der Anmeldung: 01.02.2017
(73) Patentinhaber: Siemens Aktiengesellschaft, 80333 München (DE)
(72) Erfinder: Fries, Steffen, 85598 Baldham (DE); Schafheutle, Marcus, 81539 München (DE)

(56) Entgegenhaltungen:
- WO-A1-03/088571
- US-A1- 2012 008 784
- US-A1- 2014 075 198
- US-A1- 2015 113 264

## Beschreibung

Die Erfindung bezieht sich auf ein Verfahren und System, um einen sicheren Kommunikationskanal für Endgeräte zu erzeugen.

Sicherheitsnachweise (engl. Security Credentials) wie insbesondere digitale Zertifikate, ein Sicherheits-Token (engl. Security Token) oder ein Sicherheitsticket (engl. Security Ticket) werden benötigt, um Sicherheitsdienste in bestimmten Szenarien zu unterstützen. Solche Sicherheitsdienste können beispielsweise das Etablieren eines Kommunikationskanals zwischen zwei Partnern sein, oder auch der Transport eines Lizenztickets zwischen zwei oder drei teilnehmenden Parteien. Üblicherweise stellt eine Sicherheitsinfrastruktur einen solchen Sicherheitsnachweis bereit.

In einer spezifischen Anwendung, welche die Kommunikation von drei Parteien umfasst, besteht ein Bedarf sicherzustellen, dass ein Sicherheitsnachweis zum einen kryptographisch korrekt aber auch über einen abgesicherten Kommunikationskanal transportiert wurde.

Es sind folgende Dokumente bekannt:
US2014/0075198 offenbart ein konventionelles Verfahren zum authentifizierten Übertragen von Video- oder anderen Daten von einem Provider zum einem Empfangsgerät über ein Übermittlungsgerät.
US2012008784 offenbart ein konventionelles Schlüsselaustauschverfahren.

Die Aufgabe der Erfindung ist es, einen sicheren Kommunikationskanal bereitzustellen, um einen Sicherheitsnachweis zu transportieren.

Gemäß einem ersten Aspekt betrifft die Erfindung ein Verfahren zum Erzeugen eines sicheren Kommunikationskanals für ein Endgerät. Das Verfahren umfasst einen Verfahrensschritt zum Aufbauen eines sicheren Kommunikationskanals mittels eines Kommunikationsprotokolls zwischen einem Kommunikationspartner und einem Back-End, wobei jeweils eine Kanalbindungsinformation für das Back-End und für den Kommunikationspartner durch das Kommunikationsprotokoll festgelegt wird. Das Verfahren umfasst einen Verfahrensschritt zum Erzeugen eines Kommunikationskanals zwischen dem Kommunikationspartner und dem Endgerät. Das Verfahren umfasst einen Verfahrensschritt zum Übermitteln der Kanalbindungsinformation über den sicheren Kommunikationskanals durch den Kommunikationspartner an das Endgerät. Das Verfahren umfasst einen Verfahrensschritt zum Speichern der Kanalbindungsinformation auf dem Endgerät. Das Verfahren umfasst einen Verfahrensschritt zum Erstellen einer Datenstruktur und einer ersten digitalen Signatur über die Datenstruktur durch das Back-End mit einem ersten privaten Schlüssel, wobei die erste digitale Signatur mit einem ersten öffentlichen Schlüssel prüfbar ist. Das Verfahren umfasst einen Verfahrensschritt zum Senden der Datenstruktur und der ersten digitalen Signatur vom Back-End an das Endgerät. Das Verfahren umfasst einen Verfahrensschritt zum Prüfen einer Authentizität der Datenstruktur mittels eines Prüfalgorithmus zur Verifikation der ersten digitalen Signatur mittels des ersten öffentlichen Schlüssels durch das Endgerät und/oder durch den Kommunikationspartner.

Unter einem "Back-End" kann im Zusammenhang mit der Erfindung beispielsweise eine datenverarbeitende Einheit jeder Art, insbesondere datenverarbeitende Einheiten mit Clientfunktionalitäten und/oder Serverfunktionalitäten, verstanden werden. Ein Back-End ist beispielsweise im Gegensatz zu einem Front-End ein Teil einer eines Computersystems (beispielsweise als Client-Server-Architektur implementiert), der insbesondere teilnehmerfern liegt. Insbesondere liegt er betrachtungsmäßig näher am System, wohingegen das Front-End näher am Benutzer liegt. In einer Client-Server-Architektur beispielsweise bildet das Back-End den Server, der die Clients versorgt.

Unter einem "Kommunikationskanal" kann im Zusammenhang mit der Erfindung beispielsweise ein Kommunikationskanal in Form einer drahtlosen Kommunikationsverbindung und/oder einer drahtgebunden Kommunikationsverbindung und/oder einer Kommunikation über einen Lichtwellenleiter und/oder analoge Kommunikation (beispielsweise Briefe).

Unter einem "Kommunikationspartner" kann im Zusammenhang mit der Erfindung beispielsweise eine Workstation mit dem Programmierwerkzeug und/oder ein Computer eines Akustikers und/oder ein Konfigurationsgerät für das Endgerät verstanden werden.

Das Verfahren erlaubt es, einen sicheren Kommunikationskanal für das Endgerät zum Back-End aufzubauen und die Datenstruktur auszutauschen. Insbesondere bietet das Verfahren den Vorteil einen sicheren Kommunikationskanal für Endgeräte aufzubauen, die selbst über geringe Rechenkapazitäten verfügen und die nur kryptographisch ungeschützte Kommunikationskanäle aufbauen können. Der Kommunikationspartner dient somit dem Endgerät als eine sichere Brücke zum Back-End. Die Kanalbindungsinformationen können hierbei für das Back-End und für den Kommunikationspartner identisch sein. Es ist aber auch möglich, dass die Kanalbindungsinformationen für das Back-End und für den Kommunikationspartner unterschiedlich sind, jedoch über eine mathematische Funktion zueinander eine eindeutige Beziehung haben.

Bei einer ersten Ausführungsform des Verfahrens weist das Verfahren einen zusätzlichen Verfahrensschritt zum Senden von Sicherheitsinformationen und/oder Identitätsinformationen von dem Endgerät über den Kommunikationspartner an das Back-End auf, wobei das Senden der Sicherheitsinformationen und/oder Identitätsinformationen von dem Endgerät über den Kommunikationspartner an das Back-End insbesondere folgende Verfahrensschritte aufweist: Einen Verfahrensschritt zum Senden der Sicherheitsinformationen und Identitätsinformationen von dem Endgerät an den Kommunikationspartner und einen Verfahrensschritt zum Senden der Sicherheitsinformationen und Identitätsinformationen des Endgeräts von dem Kommunikationspartner über den sicheren Kommunikationskanal an das Back-End.

Hiermit ist es möglich, dass sicherheitskritische Informationen des Endgerätes über den sicheren Kommunikationskanal des Kommunikationspartners an das Back-End gesendet werden.

Bei weiteren Ausführungsformen des Verfahrens umfasst die Datenstruktur die Kanalbindungsinformation und/oder Basisinformationen vom Back-End.

Der Vorteil liegt in der Einbeziehung einer eindeutigen Identifikation in Form der Kanalbindungsinformationen für den sicheren Kommunikationskanals zwischen dem Backend und dem Kommunikationspartner. Da der sichere Kommunikationskanal zwischen dem Backend und dem Kommunikationspartner nach einer vorgegeben Sicherheitsrichtline des Back-Ends etabliert wurde und mittels der Kanalbindungsinformation an die Kommunikation mit dem Endgerät gebunden wird, gibt es eine direkte Sicherheitsbeziehung zwischen Backend und Endgerät. Es ist dadurch möglich auf der Endgerätseite und auch auf Back-End-Seite sicherzustellen, dass eine Konfigurationsinformation, beispielsweise ein Lizenzticket, über einen vorher etablierten Kommunikationskanal transportiert wurde, der entsprechend einer Sicherheitsrichtlinie des Back-Ends etabliert wurde.

Bei weiteren Ausführungsformen des Verfahrens wird ein Signal durch das Endgerät und/oder durch den Kommunikationspartner bereitgestellt, falls der Prüfalgorithmus eine ungültige Authentizität feststellt.

Durch das Signal, das eine Steuerinformation enthalten kann, kann beispielsweise ein Nutzer informiert werden, falls eine ungültige Authentizität festgestellt wurde. Der Nutzer kann in einem solchen Fall beispielsweise die Verbindung beenden, um zu verhindern, dass sicherheitskritische Informationen übertragen werden. Es ist aber auch möglich, dass durch das Signal bewusst Fehlermeldungen unterdrückt werden oder auch bewusst allgemein gehalten werden.

Bei weiteren Ausführungsformen des Verfahrens wird der erste öffentliche Schlüssel für das Endgerät bereitgestellt, wobei insbesondere eine Zertifizierungsstelle oder das Back-End den ersten öffentlichen Schlüssel bereitstellt.

Hierdurch wird auf möglichst einfache Weise der erste öffentliche Schlüssel dem Endgerät bereitgestellt.

Bei weiteren Ausführungsformen des Verfahrens umfasst die Basisinformationen vom Back-End eine Konfigurationsinformation, wobei die Konfigurationsinformation insbesondere eine Lizenzinformation und/oder Programmcode zum Ausführen eines Kommandos umfasst, das durch das Endgerät auf dem Endgerät ausgeführt wird.

Auf diese Weise kann beispielsweise auf möglichst geschützte Weise eine Lizenzinformation, beispielsweise ein Lizenzticket, auf das Endgerät übertragen werden, um beispielsweise neue Gerätefunktionen auf dem Endgerät freizuschalten.

Bei weiteren Ausführungsformen des Verfahrens verfügt das Endgerät über ein zweites Schlüsselpaar in Form eines zweiten öffentlichen Schlüssels und eines zweiten privaten Schlüssels, mit dem für die Sicherheitsinformationen vom Endgerät eine zweite digitale Signatur erzeugt wird.

Auf diese Weise können die Sicherheitsinformationen kryptographisch geschützt werden. Das zweite Schlüsselpaar bzw. das verwendete kryptographische Verfahren ist dabei unabhängig vom ersten privaten Schlüssel und vom ersten öffentlichen Schlüssel, die ein erstes Schlüsselpaar bilden. Somit können jeweils unterschiedliche starke Schlüsselstärken und kryptographische Verfahren gewählt werden. Insbesondere können beispielsweise Endgeräte mit geringen Rechenkapazitäten so ein schwaches kryptographisches Verfahren verwenden und zwischen dem Kommunikationspartner und dem Back-End ein deutlich stärkeres kryptographisches Verfahren verwendet werden.

Bei weiteren Ausführungsformen des Verfahrens prüft der Kommunikationspartner eine zweite Authentizität der Sicherheitsinformation mittels des zweiten öffentlichen Schlüssels und der zweiten digitalen Signatur.

Hierdurch ist es dem Kommunikationspartner möglich die Authentizität der zweiten digitalen Signatur zu prüfen. Stellt dieser fest, dass die zweite digitale Signatur ungültig ist, so kann er beispielsweise die Verbindung zum Endgerät und/oder Back-End beenden, damit insbesondere keine sicherheitskritischen Informationen an unberechtigte Dritte gelangt.

Bei weiteren Ausführungsformen des Verfahrens umfasst die Sicherheitsinformation eine Nonce und/oder einen Bezeichner eines Zertifikates des Endgerätes und/oder nur einen Fingerabdruck des zweiten öffentlichen Schlüssels.

Die zusätzlichen Informationen in den Sicherheitsinformationen erlauben es die Kommunikation zwischen dem Endgerät und dem Back-End noch sicherer zu machen. Beispielsweise wird die Nonce (number used once) dazu verwendet um Replay-Angriffe zu verhindern. Die Nonce kann beispielsweise mittels eines Zufallsgenerators erzeugt werden oder als ein Teil eines kryptographischen Kommunikationsprotokolls erzeugt werden.

Bei weiteren Ausführungsformen des Verfahrens werden die Sicherheitsinformation und/oder die Kanalbindungsinformation und/oder die Identitätsinformationen ganz oder teilweise in die erste digitale Signatur eingerechnet.

Die Einbeziehung der Kanalbindungsinformation in die digitale Signatur hat insbesondere den Vorteil, dass das Endgerät die Existenz eines sicheren Kommunikationskanals zwischen Backend und Kommunikationspartner überprüfen kann. Dies ist möglich, da der Kommunikationspartner seine Kanalbindungsinformation an das Endgerät übermittelt hat und das Back-End ebenfalls seine Kanalbindungsinformation in der ersten digitalen Signatur abgelegt hat. Dadurch, dass durch die erste digitale Signatur die Kanalbindungsinformation des Back-Ends kryptographisch geschützt ist, wird sichergestellt, dass eine Manipulation erkennbar ist. Das Endgerät vergleicht die Kanalbindungsinformation und würde bei einer Manipulation der Verbindung, beispielsweise ein Session Hijacking, das Ausführen einer Konfigurationsinformation ablehnen. Durch das Verfahren ist es möglich, dass ein rechenschwaches Endgerät, das nur über schwache kryptographische Schutzmechanismen verfügt, dennoch die Vorteile eines kryptographisch stark geschützten Kommunikationskanal nutzen kann.

Bei weiteren Ausführungsformen des Verfahrens umfasst die Datenstruktur und/oder die erste digitale Signatur eine Legitimitätsinformation, die das Endgerät veranlassen insbesondere eine bestimmte Programmierung einzuschalten.

Durch das Verfahren ist es möglich, dass ein rechenschwaches Endgerät, das nur über schwache kryptographische Schutzmechanismen verfügt, dennoch die Vorteile eines kryptographisch stark geschützten Kommunikationskanal nutzen kann. Insbesondere ist die Legitimitätsinformation durch die erste digitale Signatur geschützt.

Bei weiteren Ausführungsformen des Verfahrens wird die Datenstruktur um die erste digitale Signatur erweitert.

Hierdurch wird erreicht, dass die Handhabung der Daten weiter vereinfacht wird. Im Einzelnen wird die Datenstruktur durch ein Anhängen der ersten digitalen Signatur erweitert und als eine Einheit verschickt.

Bei weiteren Ausführungsformen des Verfahrens umfassen die Datenstruktur zusätzlich die Sicherheitsinformationen und/oder Identitätsinformationen von dem Endgerät.

Durch die Einbeziehung beispielsweise der Identitätsinformation in die Datenstruktur kann insbesondere ein Endgerät, für das eine Manipulation einer Kommunikationsverbindung erkannt wurde, beispielsweise in einen gesicherten Zustand gebracht werden, um weitere Manipulationen zu verhindern.

Bei weiteren Ausführungsformen des Verfahrens prüft der Prüfalgorithmus zum Feststellen der Authentizität zusätzlich die gespeicherte Kanalbindungsinformation und die Kanalbindungsinformation, wobei der Prüfalgorithmus insbesondere auf dem Endgerät und/oder auf dem Kommunikationspartner ausgeführt wird.

Der Vorteil der Einbeziehung der Kanalbindungsinformation in die erste digitale Signatur und/oder die Datenstruktur ist, dass das Endgerät die Existenz des sicheren Kommunikationskanals zwischen Backend und Kommunikationspartner überprüfen kann. Dies ist möglich, da der Kommunikationspartner seine Kanalbindungsinformation an das Endgerät übermittelt hat und das Back-End ebenfalls seine Kanalbindungsinformation in der ersten digitalen Signatur abgelegt hat. Dadurch, dass durch die erste digitale Signatur die Kanalbindungsinformation des Back-Ends kryptographisch geschützt ist, wird sichergestellt dass eine Manipulation erkennbar ist. Das Endgerät vergleicht die Kanalbindungsinformation und würde bei einer Manipulation der Verbindung, beispielsweise ein Session Hijacking, das Ausführen einer Konfigurationsinformation ablehnen. Durch das Verfahren ist es also möglich, dass ein rechenschwaches Endgerät, das nur über schwache kryptographische Schutzmechanismen verfügt, dennoch die Vorteile eines kryptographisch stark geschützten Kommunikationskanal nutzen kann.

Bei weiteren Ausführungsformen des Verfahrens schickt beim Senden der Sicherheitsinformationen und Identitätsinformationen von dem Kommunikationspartner an das Back-End, der Kommunikationspartner Zusatzinformationen mit, wobei die Zusatzinformationen insbesondere eine Nutzerinformation umfassen.

Durch die Einbeziehung beispielsweise der Nutzerinformation kann insbesondere ein Nutzer, der das Endgerät programmieren möchte und für das Endgerät eine Basisinformation, Datenstruktur und/oder Konfigurationsinformation, beispielsweise eine Lizenzinformation, um neue Funktionen auf dem Endgerät freizuschalten, angefordert hat, über eine potentielle Manipulation der Kommunikationsverbindung zum Back-End informiert werden.

Bei weiteren Ausführungsformen des Verfahrens wird der erste öffentliche Schlüssel beim Senden der Datenstruktur mit gesendet.

Hiermit lässt sich auf besonders einfache Weise der erste öffentliche Schlüssel dem Endgerät bereitstellen.

Bei einer weiteren Ausführungsform wird der erste öffentliche Schlüssel durch den Kommunikationspartner geprüft, bevor der erste öffentliche Schlüssel an das Endgerät weitergeleitet wird, wobei der öffentliche Schlüssel insbesondere ein Zertifikat ist, wobei das Zertifikat insbesondere gegen einen bekannten Austeller validiert wird, wobei das Validieren des Zertifikats insbesondere eine Gültigkeit und/oder einen Rückweisungsstatus umfassen.

Bei weiteren Ausführungsformen des Verfahrens wird der erste öffentliche Schlüssel zu einem früheren Zeitpunkt dem Endgerät bereitgestellt, wobei der frühere Zeitpunkt insbesondere der Fertigungszeitpunkt des Endgerätes ist, wobei der erste öffentliche Schlüssel insbesondere vor Veränderung auf dem Endgerät geschützt ist.

Hiermit lässt sich beispielsweise der erste öffentliche Schlüssel in einen lese- und/oder schreibgeschützten Speicher des Endgerätes während der Fertigung ablegen. Wenn beispielsweise der erste öffentliche Schlüssel in einem Nur-LeseSpeicher, z.B. ROM (Read Only Memory) oder WORM (Write Once Read Memory), abgelegt ist, ist dieser besonders gut vor Manipulationen geschützt.

Bei weiteren Ausführungsformen des Verfahrens ist der erste private Schlüssel ein Geheimnis, das dem Back-End bekannt ist, wobei das Geheimnis insbesondere ausschließlich dem Back-End bekannt ist.

Hierdurch wird eine hohe Sicherheit erreicht, da nur das Back-End in der Lage ist eine gültige erste digitale Signatur zu erstellen.

Bei weiteren Ausführungsformen des Verfahrens verfügt das Endgerät nur über sicherheitsunkritische Informationen.

Das Verfahren kann insbesondere für Endgeräte mit keinen oder geringen Sicherheitsfunktionen bzw. kryptographischen Funktionen eingesetzt werden. Dies hat insbesondere den Vorteil, dass diese Endgeräte dennoch einen Kommunikationskanal nutzen können, der stark kryptographisch geschützt ist.

Bei weiteren Ausführungsformen des Verfahrens wird der sichere Kommunikationskanal mittels eines symmetrischen Verfahrens erzeugt, wobei das symmetrisches Verfahren insbesondere eine Authentisierung mit einem Benutzernamen und einem Passwort verwendet, oder der sichere Kommunikationskanal wird mittels eines asymmetrischen Verfahrens erzeugt, wobei das asymmetrisches Verfahren insbesondere ein digitales Zertifikat verwendet.

Durch die Verwendbarkeit von unterschiedlichen kryptographischen Verfahren, kann das erfindungsgemäße Verfahren beispielsweise für unterschiedliche Sicherheitsinfrastrukturen verwendet werden.

Bei weiteren Ausführungsformen des Verfahrens, wird das Signal von dem Back-End oder einem weiteren Kommunikationspartner ausgewertet.

Durch die Auswertung des Signals kann beispielsweise bei dem weiteren Kommunikationspartner, beispielsweise eine Sicherheitsstation, überprüft werden, welche Endgeräte potentiell einem Manipulationsversuch ausgesetzt waren und diese Endgeräte beispielsweise in einen sicheren Zustand bringen. Dies geschieht beispielsweise während ein betroffenes Endgerät noch mit dem Back-End kommuniziert oder bei der nächsten Kommunikation eines betroffenen Endgeräts mit dem Back-End.

Bei weiteren Ausführungsformen des Verfahrens erfüllt der sichere Kommunikationskanal Sicherheitsanforderungen, die vom Back-End festgelegt werden, wobei das Endgerät insbesondere die erste digitale Signatur prüft, um festzustellen, ob der Kommunikationskanal wirklich den Sicherheitsanforderungen des Back-Ends genügt.

Hiermit kann das Back-End beispielsweise Sicherheitsparameter, wie Schlüsselstärke oder das Kommunikationsprotokoll, festlegen und kann somit implizit auch die Kanalbindungsinformation festlegen. Das hat den Vorteil, dass das Back-End die Sicherheitsanforderungen für die Kommunikation mit dem Endgerät festlegen kann, ohne, dass das Endgerät über kryptographische Funktionen bzw. kryptographische Kommunikationsprotokolle verfügen muss.

Gemäß einem weiteren Aspekt betrifft die Erfindung ein System. Das System weist ein Back-End, einen Kommunikationspartner und ein Endgerät auf. Ferner umfasst das Backend eine erste Kryptographieeinrichtung, eine erste Kommunikationseinrichtung und eine Erzeugungseinrichtung. Die Erzeugungseinrichtung erstellt eine Datenstruktur und eine erste digitale Signatur über die Datenstruktur mittels der ersten Kryptographieeinrichtung und einem ersten privaten Schlüssel, wobei die erste digitale Signatur mit einem ersten öffentlichen Schlüssel prüfbar ist. Die erste Kommunikationseinrichtung ist mittels eines ersten Prozessors zum Senden der Datenstruktur und der digitalen Signatur an ein Endgerät programmiert. Zusätzlich ist die erste Kommunikationseinrichtung mittels des ersten Prozessors zum Aufbau eines sicheren Kommunikationskanals mit einem Kommunikationspartner mittels eines Kommunikationsprotokolls unter Verwendung der ersten Kryptographieeinrichtung programmiert, wobei jeweils eine Kanalbindungsinformation durch das Kommunikationsprotokoll für das Back-End und für den Kommunikationspartner festgelegt wird. Der Kommunikationspartner umfasst eine zweite Kryptographieeinrichtung und eine zweite Kommunikationseinrichtung. Die zweite Kommunikationseinrichtung ist mittels eines zweiten Prozessors zum Aufbau des sicheren Kommunikationskanals mit dem Back-End unter Verwendung der zweiten Kryptographieeinrichtung programmiert. Zusätzlich ist die zweite Kommunikationseinrichtung mittels des zweiten Prozessors zum Aufbau eines Kommunikationskanals mit dem Endgerät programmiert. Zusätzlich ist die zweite Kommunikationseinrichtung mittels des zweiten Prozessors zum Senden der Kanalbindungsinformationen an das Endgerät programmiert. Das Endgerät umfasst eine dritte Kommunikationseinrichtung, eine Prüfeinrichtung und einen Speicher. Die dritte Kommunikationseinrichtung ist mittels eines dritten Prozessors zum Aufbau des Kommunikationskanals mit dem Kommunikationspartner programmiert. Zusätzlich ist die dritte Kommunikationseinrichtung mittels des dritten Prozessors zum Empfang der Kanalbindungsinformationen und/oder der Datenstruktur und/oder der ersten digitalen Signatur und/oder des ersten öffentlichen Schlüssels programmiert. Die Prüfeinrichtung prüft eine Authentizität der Datenstruktur mittels eines Prüfalgorithmus unter Verwendung der ersten digitalen Signatur und des ersten öffentlichen Schlüssels. Der Speicher speichert die Kanalbindungsinformationen und/oder die Datenstruktur und/oder die erste digitale Signatur und/oder den ersten öffentlichen Schlüssel.

Bei einer ersten Ausführungsform des Systems ist das System ganz oder teilweise ein virtualisiertes System.

Hierdurch lassen sich insbesondere Systemkomponenten günstig implementieren ohne kostspielige Hardware zu verwenden.

Desweiteren wird ein Computerprogrammprodukt mit Programmbefehlen zur Durchführung des genannten erfindungsgemäßen Verfahrens beansprucht. Zusätzlich wird eine Bereitstellungsvorrichtung zum Speichern und/oder Breitstellen einer Datenstruktur, die das Computerprogrammprodukt umfasst, beansprucht. Die Bereitstellungsvorrichtung ist beispielsweise ein Datenträger, der das Computerprogrammprodukt speichert oder bereitstellt. Alternativ ist die Bereitstellungsvorrichtung beispielsweise ein Computersystem, ein Serversystem, ein Netzwerk, ein cloudbasiertes Rechnersystem und/oder virtuellen Rechnersystem, welches das Computerprogrammprodukt speichert und/oder bereitstellt. Diese Bereitstellung erfolgt vorzugsweise als Download des vollständigen Computerprogrammprodukts, kann aber beispielsweise auch als partieller Download erfolgen, der aus mehreren Teilen besteht und insbesondere über ein Peer-to-Peer Netzwerk heruntergeladen wird. Ein solches Computerprogrammprodukt wird beispielsweise unter Verwendung der Bereitstellungsvorrichtung in Form des Datenträgers in einem System eingelesen und führt die Programmbefehle aus, sodass das erfindungsgemäße Verfahren auf einem Computer zur Ausführung gebracht wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen:
- Fig. 1: eine Darstellung eines Ausführungsbeispiels eines Verfahrens zum Erzeugen eines sicheren Kommunikationskanals für Endgeräte; und

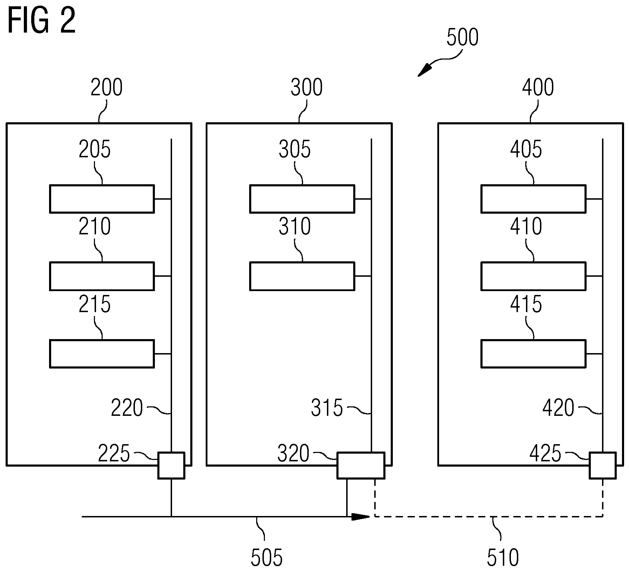

- Fig. 2: eine Darstellung eines Ausführungsbeispiels eines Systems zum Erzeugen eines sicheren Kommunikationskanals für Endgeräte.

In den Figuren sind funktionsgleiche Elemente mit denselben Bezugszeichen versehen, sofern nichts anderes angegeben ist.

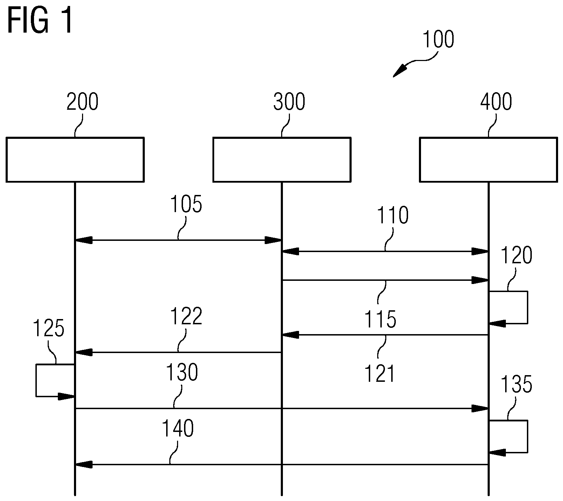

Fig. 1 zeigt eine Darstellung eines Ausführungsbeispiels eines Verfahrens zum Erzeugen eines sicheren Kommunikationskanals für Endgeräte 400, beispielsweise Hörgeräte.

Die Qualität der Leistung eines Hörgeräts lässt sich beispielsweise über ein sogenanntes Leistungsniveau (engl. Performance Level) einstellen. Das heißt je höher das Leistungsniveau desto besser ist die Leistung des Hörgeräts, desto höher ist aber auch der Preis für das Hörgerät. Möchte ein Akustiker beispielsweise das Leistungsniveau eines Hörgerätes für einen Kunden erhöhen, so muss diese Funktion auf dem Hörgerät beispielsweise durch ein Lizenzticket von dem Hörgerätehersteller freigeschaltet werden. Der Hörgerätehersteller wiederum wird das höhere Leistungsniveau dem Akustiker dann in Rechnung stellen und der Akustiker gibt die höheren Kosten entsprechend an seinen Kunden weiter. Das oben erwähnte Lizenzticket entspricht dabei einer Lizenz, um das Leistungsniveau für ein Hörgerät intern einzustellen. Ein Programmierwerkzeug eines Kommunikationspartners 300 übernimmt dabei zum einen die Kommunikation mit dem Endgerät 400 bzw. Hörgerät. Zusätzlich stellt das Programmierwerkzeug einen sicheren Kommunikationskanal zum Back-End des Hörgeräteherstellers her, bei dem vorzugsweise der Akustiker ein Konto für Bestellungen und Abrechnungen unterhält und sich hierfür mit einem Nutzername und einem Passwort authentisieren muss.

Im Einzelnen wird in diesem Ausführungsbeispiel auf einem Endgerät 400, beispielsweise ein Hörgerät, durch einen Kommunikationspartner 300, beispielsweise eine Workstation mit dem Programmierwerkzeug für das Endgerät 400, eine gewünschte Funktion, beispielsweise eine Erhöhung des Leistungsniveaus des Hörgerätes, ausgeführt. Mit anderen Worten möchte der Kommunikationspartner 300 mit dem Programmierwerkzeug die gewünschte Funktion auf dem Endgerät 400 freischalten. Hierzu muss beispielsweise der Kommunikationspartner 300 eine Konfigurationsinformation, beispielsweise eine Lizenz zum Freischalten der gewünschten Funktionen, für das Endgerät 400 bei einem Back-End 200 anfordern.

In einem ersten Verfahrensschritt 105 wird eine sichere Verbindung in Form eines sicheren bzw. sicherheitsgeschützten Kommunikationskanals zwischen dem Kommunikationspartner 300 und dem End-Gerät 200 aufgebaut. Hierzu wird ein Kommunikationsprotokoll, beispielsweise ein hybrides Verschlüsselungsprotokoll wie das Transportschichtsicherheitsprotokoll (engl., TLS, Transport Layer Security Protocol) verwendet. Das Kommunikationsprotokoll legt jeweils Kanalbindungsinformationen für einen gesicherten Kommunikationskanal zwischen dem Kommunikationspartner 300 und dem Back-End 200 fest. Für die Authentisierung wird hierbei zum einen eine serverseitige Authentisierung des Back-Ends 200 als Teil des Kommunikationsprotokolls durchgeführt, zum anderen wird eine Authentisierung auf Seiten des Programmierwerkzeugs basierend auf einem Nutzernamen und einem Passwort des Benutzers des Programmierwerkzeugs durchgeführt. Das Endgerät 400 kennt diesen gesicherten Kommunikationskanal nicht und verwendet zur Kommunikation mit dem Programmierwerkzeug bzw. dem Kommunikationspartner 300 vorzugsweise eine kryptographisch ungeschützte oder eine kryptographisch schwächer geschützte Verbindung als die Verbindung, welche zwischen dem Kommunikationspartner 300 und dem Back-End 200 besteht.

Die Kanalbindungsinformationen können dabei für das Back-End 200 und für den Kommunikationspartner 300 identisch sein. Alternativ können unterschiedliche Kanalbindungsinformationen für das Back-End 200 und für den Kommunikationspartner 300 verwendet werden. Hierbei ist es notwendig, dass aus einer ersten Kanalbindungsinformation des Kommunikationspartners 300 eine zweite Kanalbindungsinformation des Back-Ends 200 durch eine Transformationsfunktion berechenbar ist. Es ist aber auch möglich, dass aus der zweiten Kanalbindungsinformation mit der gleichen Transformationsfunktion oder einer anderen geeigneten Transformationsfunktion die erste Kanalbindungsinformation berechnet wird. Zusätzlich müssen dem Endgerät 400 die Transformationsfunktionen bekannt sein, damit dieses ggf. eine empfangene Kanalbindungsinformation darauf überprüfen kann, ob empfangene Daten vom dem Back-End 200 über den sicheren Kommunikationskanal von dem Endgerät 400 bzw. den Kommunikationspartner 300 angefordert wurden. Hierdurch lassen sich insbesondere Manipulationen an dem sicheren Kommunikationskanal erkennen.

Um von dem Kommunikationspartner 300 die gewünschten Funktionen auf dem Endgerät 400 freizuschalten, wird in einem zweiten Verfahrensschritt 110 ein Kommunikationskanal von dem Kommunikationspartner 300 zum Endgerät 400 aufgebaut. Das Programmierwerkzeug kann nun für den gesicherten Kommunikationskanal die Kanalbindungsinformationen des Kommunikationspartners 300 bestimmen.

Mittels des Programmierwerkzeugs wird in einem dritten Verfahrensschritt 115 eine Anfrage beim Endgerät 400 gestellt, um eine neue Lizenzanfrage zu generieren. Zusätzlich zur Lizenzanfrage enthält die Anfrage noch die Kanalbindungsinformationen des Kommunikationspartners 300. Das Endgerät 400 speichert in einem Verfahrensschritt 120 diesen Wert dann bis zum Erhalt des neuen Lizenztickets.

Das Endgerät 400 generiert mittels eines Zufallsgenerators Sicherheitsinformationen beispielsweise in Form einer Zufallszahl, die auch als Nonce (engl. number used once) bezeichnet wird, und schickt in einem vierten Verfahrensschritt 121 diese Sicherheitsinformationen an das Programmierwerkzeug, zusammen einer Identitätsinformation, beispielsweise ein eindeutiger Gerätebezeichner, des Endgerätes 400. Um die gewünschten Funktionen freizuschalten sendet das Endgerät 400 noch eine Lizenzanforderung an den Kommunikationspartner 300 bzw. an das Programmierwerkzeug. Diese Endgeräteinformationen, also die Lizenzanforderung, die Sicherheitsinformationen und die Identitätsinformation, werden zusammen in einem fünften Verfahrensschritt 122 mit Zusatzinformationen des Kommunikationspartners 300, beispielsweise Nutzerinformationen über den aktuellen Benutzer des Programmierwerkzeugs, an das Back-End 200 übertragen.

Das Back-End 200 wiederum prüft die Autorisierung und erstellt in einem sechsten Verfahrensschritt 125 eine Datenstruktur, beispielsweise ein Lizenzticket, mit dem neuen angeforderten Lizenzwert für die gewünschten Funktionen, die freigeschaltet werden sollen. Das Lizenzticket besteht beispielsweise aus der Lizenzanforderung, Kanalbindungsinformation des Back-Ends 200 und der ersten digitalen Signatur über die Identitätsinformation, die Nonce und einen neuen Lizenzwert. Das Back-End 200 besitzt hierfür den notwendigen ersten privaten Schlüssel zur Signaturerzeugung und das Endgerät 400 den zugehörigen ersten öffentlichen Schlüssel, der für die Überprüfung der ersten digitalen Signatur notwendig ist. Der erste öffentliche Schlüssel muss auf dem Endgerät 400 lediglich vor Modifikation geschützt werden. Man kann auch sagen, dass das Endgerät 400 das Root-Zertifikat des ersten öffentlichen Schlüssels des Back-Ends 200 besitzt.

In einem siebten Verfahrensschritt 130 sendet das Back-End 200 die Datenstruktur und die erste digitale Signatur an das Endgerät 400. Diese Daten, also die erste digitale Signatur und die Datenstruktur, können beispielsweise über einen separaten kryptographisch ungeschützten Kanal an das Endgerät 400 gesendet werden. Alternativ kann aber auch die bestehende Verbindung über den Kommunikationspartner 300 für das Senden genutzt werden.

Damit hat das Endgerät 400 nicht nur die Möglichkeit in einem achten Verfahrensschritt 135 mittels eines Prüfalgorithmus zu überprüfen, dass das Lizenzticket kryptographisch korrekt ist, sondern auch, ob das Lizenzticket über den gesicherten Kommunikationskanal zur Verfügung gestellt wurde, welcher den Sicherheitsanforderungen (engl. Security Policy), beispielsweise die Stärke der kryptographischen Verfahren, die Stärke der Authentisierung, der Integritätsschutz und auch der Verschlüsselung, des Back-Ends 200 entspricht. Dies wird dadurch festgelegt, dass das Back-End 200 die Sicherheitsanforderungen für den gesicherten Kommunikationskanal zum Kommunikationspartner 300 vorgibt. Da das Endgerät 400 mittels des Prüfalgorithmus eine ausreichende Übereinstimmung der auf dem Endgerät 400 gespeicherten Kanalbindungsinformationen und der Kanalbindungsinformationen der Datenstruktur bzw. der ersten digitalen Signatur prüft, kann damit die Einhaltung der Sicherheitsanforderungen vom Back-End 200 indirekt auf dem Endgerät 400 sichergestellt werden. Voraussetzung dafür ist ein Vertrauensverhältnis vom Endgerät 400 zum Back-End 200, das durch das vorhandene Root-Zertifikat im Endgerät 400 gegeben ist.

In einem neunten Verfahrensschritt 140 wird beispielsweise ein Signal, das eine Steuerinformation umfasst, durch das Endgerät 400 und/oder durch den Kommunikationspartner 300 bereitgestellt, falls der Prüfalgorithmus eine ungültige Authentizität für die erste digitale Signatur oder eine mangelnde Übereinstimmung der auf dem Endgerät 400 gespeicherten Kanalbindungsinformationen und der Kanalbindungsinformationen, die vom Back-End geschickt wurden, feststellt.

In einer Variante wird vom Kommunikationsprotokoll statt einer unilateralen Authentisierung zwischen dem Back-End 200 und dem Kommunikationspartner 300 eine beiderseitige Authentisierung mittels eines Handshake Verfahrens, beispielsweise ein TLS Handshake, basierend auf digitalen Zertifikaten, beispielsweise X.509 Zertifikaten, und korrespondierenden privaten Schlüsseln durchgeführt. Hierbei kann idealerweise die Nutzerinformation im Zertifikat des Kommunikationspartners 300 stehen. Damit kann gegebenenfalls auf die Authentisierung mittels eines Nutzernamens und eines Passworts verzichtet werden.

In einer weiteren Variante wird für die Kommunikation zwischen dem Kommunikationspartner 300 bzw. dem Programmierwerkzeug und dem Endgerät 400 ein Protokoll mit einem integrierten Schutz der Kommunikation eingesetzt. Dies setzt jedoch auf beiden Seiten das entsprechende Schlüsselmaterial, beispielsweise ein zweites Schlüsselpaar mit einem zweiten privaten Schlüssel und einem zweiten öffentlichen Schlüssel, voraus. Ein mögliches Protokoll ist wiederum das TLS Protokoll. Allerdings sind hier die Sicherheitsanforderungen vorzugsweise schwächer als die Sicherheitsanforderungen an den sicheren Kommunikationskanal.

In einer weiteren Variante werden die Kanalbindungsinformationen durch einen der nachfolgenden Parameter gebildet. Es ist aber auch möglich, dass die Kanalbindungsinformation aus mehreren Parametern gebildet wird.
- Einen Identifizierer für den sicheren Kommunikationskanal oder die Sitzung zwischen dem Back-End 200 und den Kommunikationspartner 300. Beispielsweise kann bei der Verwendung des TLS-Protokolls der tlsunique Parameter verwendet werden.
- Einen Identifizierer des Senders des gesicherten Kommunikationskanals.
- Einen Identifizierer des Empfängers des gesicherten Kommunikationskanals.
- Informationen zur ausgehandelten Kommunikationssicherheit, beispielsweise das verwendete Authentisierungsverfahren, der verwendete Integritätsschutz und/oder das verwendete Niveau der Vertraulichkeit.
- Einen Zeitstempel, beispielsweise der Zeitpunkt an dem der gesicherte Kommunikationskanal erzeugt wurde.
- Eine Nonce, die beispielsweise von einem Zufallsgenerator erzeugt wurde.

In einer weiteren Variante prüft der Kommunikationspartner bzw. das Programmierwerkzeug das Lizenzticket, bevor es an das Endgerät 400 weitergeleitet wird. Dies ist insbesondere dann sinnvoll, wenn das Endgerät 400 bezüglich Speicher und/oder Rechenkapazität eingeschränkt ist. Dabei hängen mögliche Reaktionen, beispielsweise das Löschen von Daten, das Verarbeitung einer Fehlermeldung, das Erzeugen eines Alarms, des Programmier-Tools vom Vertrauensverhältnis zwischen den Teilnehmern, also dem Back-End 200, dem Kommunikationspartner 300 und dem Endgerät 400, ab.

Das Computersystem 500 umfasst ein Back-End 200 beispielsweise in Form eines Lizenzservers eines Hörgeräteherstellers, vorzugsweise ein Server mit einem Linux-Betriebssystem. Der Lizenzserver ist beispielsweise mit einer ersten Schnittstelle 225 über eine Internetverbindung 505 mit einer zweiten Schnittstelle 320 eines Kommunikationspartners 300 in Form eines Computers eines Akustikers, vorzugsweise einen Apple iMac, verbunden. Der Kommunikationspartner 300 ist beispielsweise mittels der zweiten Schnittstelle 320 über eine lokale Netzwerkverbindung 510, vorzugsweise eine kabellose Netzwerkverbindung, mit der dritten Schnittstelle 425 eines Endgeräts 400, vorzugsweise eines Hörgerät, verbunden.

Das Back-End 200 und der Kommunikationspartner 300 umfassen beispielsweise jeweils marktübliche Hardwarekomponenten, wie ein Anzeigegerät vorzugsweise in Form eines TFT Monitors, mindestens ein Eingabegerät vorzugsweise in Form einer Computermaus und/oder einer Tastatur, mindestens einen Datenträger vorzugsweise in Form einer Solid-State Festplatte und/oder eines DVD-Lese- und/oder Schreiblaufwerkes, einen Prozessor, vorzugsweise einen Intel x86 kompatiblen Prozessor, eine Netzwerkschnittstelle, vorzugsweise eine Ethernet-Schnittstelle, Arbeitsspeicher, vorzugsweise DDR RAM, und/oder weitere dem Fachmann bekannten Hardware oder Peripheriegeräten.

Zusätzlich umfasst das Back-End 200 eine erste Kryptographieeinrichtung 205, eine Erzeugungseinrichtung 210 eine erste Kommunikationseinrichtung 215 und die erste Schnittstelle 225, die über einen ersten internen Bus 220, beispielsweise einen Datenbus, miteinander kommunikativ in Verbindung stehen. Die Erzeugungseinrichtung 210 erstellt eine Datenstruktur und eine erste digitalen Signatur über die Datenstruktur mittels der ersten Kryptographieeinrichtung 205 und einem ersten privaten Schlüssel, wobei die erste digitale Signatur mit einem ersten öffentlichen Schlüssel prüfbar ist. Die erste Kommunikationseinrichtung 215 ist mittels eines ersten Prozessors zum Senden der Datenstruktur und der ersten digitalen Signatur an ein Endgerät 400 programmiert. Zusätzlich ist die erste Kommunikationseinrichtung 215 mittels des ersten Prozessors zum Aufbau eines sicheren Kommunikationskanals mit einem Kommunikationspartner 300 mittels eines Kommunikationsprotokolls unter Verwendung der ersten Kryptographieeinrichtung 205 programmiert, wobei jeweils eine Kanalbindungsinformation durch das Kommunikationsprotokoll für das Back-End 200 und für den Kommunikationspartner 300 festgelegt wird.

Zusätzlich umfasst der Kommunikationspartner 300 eine zweite Kryptographieeinrichtung 305, eine zweite Kommunikationseinrichtung 310 und die zweite Schnittstelle 320, die über einen zweiten internen Bus 315, beispielsweise einen Datenbus, miteinander kommunikativ in Verbindung stehen. Die zweite Kommunikationseinrichtung 310 ist mittels eines zweiten Prozessors zum Aufbau des sicheren Kommunikationskanals mit dem Back-End 200 unter Verwendung der zweiten Kryptographieeinrichtung 305 programmiert. Zusätzlich ist die zweite Kommunikationseinrichtung 310 mittels des zweiten Prozessors zum Aufbau eines Kommunikationskanals mit dem Endgerät 400 programmiert. Zusätzlich ist die zweite Kommunikationseinrichtung 310 mittels des zweiten Prozessors zum Senden der Kanalbindungsinformationen an das Endgerät 400 programmiert.

Das Endgerät 400 umfasst eine dritte Kommunikationseinrichtung 405, eine Prüfeinrichtung 410, einen Speicher 415 und die dritte Schnittstelle 425, die über einen dritten internen Bus 420, beispielsweise einen Datenbus, miteinander kommunikativ in Verbindung stehen. Darüber hinaus weist das Endgerät 400 weitere dem Fachmann bekannte Komponenten auf, die für ein Hörgerät aus dem Stand der Technik bekannt sind.

Die dritte Kommunikationseinrichtung 405 ist mittels eines dritten Prozessors zum Aufbau des Kommunikationskanals mit dem Kommunikationspartner 300 programmiert. Zusätzlich ist die dritte Kommunikationseinrichtung 405 mittels des dritten Prozessors zum Empfang der Kanalbindungsinformationen und/oder der Datenstruktur und/oder der ersten digitalen Signatur und/oder des ersten öffentlichen Schlüssels programmiert.

Die Prüfeinrichtung 410 prüft eine Authentizität der Datenstruktur mittels eines Prüfalgorithmus unter Verwendung der ersten digitalen Signatur und des ersten öffentlichen Schlüssels.

Der Speicher 415 speichert die Kanalbindungsinformationen und/oder die Datenstruktur und/oder die erste digitale Signatur und/oder den ersten öffentlichen Schlüssel.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (100) zum Erzeugen eines sicheren Kommunikationskanals für ein Endgerät (400), wobei das Verfahren folgende Verfahrensschritte aufweist:
- Aufbauen (105) eines sicheren Kommunikationskanals mittels eines Kommunikationsprotokolls zwischen einem Kommunikationspartner (300) und einem Back-End (200), wobei jeweils eine Kanalbindungsinformation für das Back-End (200) und für den Kommunikationspartner (300) durch das Kommunikationsprotokoll festgelegt wird;
- Erzeugen (110) eines Kommunikationskanals zwischen dem Kommunikationspartner (300) und dem Endgerät (400);
- Übermitteln (115) der Kanalbindungsinformation, die den den sicheren Kommunikationskanal betreffen, durch den Kommunikationspartner (300) an das Endgerät (400);
- Speichern (120) der Kanalbindungsinformation auf dem Endgerät (400);
- Erstellen (125) einer Datenstruktur und einer ersten digitalen Signatur über die Datenstruktur durch das Back-End (200) mit einem ersten privaten Schlüssel, wobei die digitale Signatur mit einem ersten öffentlichen Schlüssel prüfbar ist;
- Senden (130) der Datenstruktur und der digitalen Signatur vom Back-End (200) an das Endgerät (400); und
- Prüfen (135) einer Authentizität der Datenstruktur mittels eines Prüfalgorithmus zur Verifikation der digitalen Signatur mittels des öffentlichen Schlüssels durch das Endgerät (400) und/oder durch den Kommunikationspartner (300),
**dadurch gekennzeichnet, dass**
- die Datenstruktur die Kanalbindungsinformation und/oder Basisinformationen vom Back-End (400) umfasst,
- der Prüfalgorithmus zum Feststellen der Authentizität zusätzlich die gespeicherte Kanalbindungsinformation und die Kanalbindungsinformation prüft,
- der sichere Kommunikationskanal Sicherheitsanforderungen erfüllt, die vom Back-End (200) festgelegt werden, wobei das Endgerät (400) die erste Signatur prüft um festzustellen, ob der Kommunikationskanal wirklich den Sicherheitsanforderungen des Back-Ends (200) genügt.

2. Verfahren (100) nach Anspruch 1, wobei das Verfahren einen zusätzlichen Verfahrensschritt zum Senden von Sicherheitsinformationen oder/und Identitätsinformationen von dem Endgerät (400) über den Kommunikationspartner (300) an das Back-End (200) aufweist.

3. Verfahren (100) nach Anspruch 1 oder 2, wobei das Verfahren folgende Verfahrensschritte aufweist:
- Senden (121) der Sicherheitsinformationen und Identitätsinformationen des Endgeräts (400) von dem Endgerät (400) an den Kommunikationspartner (300);
- Senden (122) der Sicherheitsinformationen und Identitätsinformationen des Endgeräts (400) von dem Kommunikationspartner (300) über den sicheren Kommunikationskanal an das Back-End (200).

4. Verfahren (100) nach einem der vorhergehenden Ansprüche, wobei ein Signal durch das Endgerät (400) und/oder durch den Kommunikationspartner (300) bereitgestellt (140) wird, falls der Prüfalgorithmus eine ungültige Authentizität feststellt.

5. Verfahren (100) nach einem der vorhergehenden Ansprüche, wobei der erste öffentliche Schlüssel für das Endgerät (400) bereitgestellt wird, wobei eine Zertifizierungsstelle oder das Back-End (200) den ersten öffentlichen Schlüssel bereitstellt.

6. Verfahren (100) nach einem der Ansprüche 3 bis 5, wobei die Basisinformationen vom Back-End (200) eine Konfigurationsinformation umfasst, wobei die Konfigurationsinformation eine Lizenzinformation und/oder Programmcode zum Ausführen ein Kommando umfasst, das durch das Endgerät (400) auf dem Endgerät (400) ausgeführt wird.

7. Verfahren (100) nach einem der Ansprüche 2 bis 6, wobei das Endgerät (400) über ein zweites Schlüsselpaar in Form eines zweiten öffentlichen Schlüssels und zweiten privaten Schlüssels verfügt, mit dem für die Sicherheitsinformationen vom Endgerät (400) eine zweite digitale Signatur erzeugt wird.

8. Verfahren (100) nach Anspruch 7, wobei der Kommunikationspartner (300) eine zweite Authentizität der Sicherheitsinformation mittels des zweiten öffentlichen Schlüssels prüft.

9. Verfahren (100) nach einem der Ansprüche 2 bis 8, wobei die Sicherheitsinformation eine Nonce und/oder einen Bezeichner eines Zertifikates des Endgerätes und/oder nur einen Fingerabdruck des zweiten öffentlichen Schlüssels aufweist.

10. Verfahren (100) nach einem der Ansprüche 2 bis 8, wobei die Sicherheitsinformation und/oder die Kanalbindungsinformation und/oder die Identitätsinformationen ganz oder teilweise in die erste digitale Signatur eingerechnet werden.

11. Verfahren (100) nach einem der vorhergehenden Ansprüche, wobei die Datenstruktur und/oder die erste digitale Signatur eine Legitimitätsinformation umfasst, die das Endgerät (400) veranlassen eine bestimmte Programmierung einzuschalten.

12. Verfahren (100) nach einem der vorhergehenden Ansprüche, wobei die Datenstruktur um die erste digitale Signatur erweitert wird.

13. Verfahren (100) nach einem der Ansprüche 2 bis 12, wobei die Datenstruktur zusätzlich die Sicherheitsinformationen und/oder Identitätsinformationen von dem Endgerät (400) umfassen.

14. Verfahren (100) nach einem der vorhergehenden Ansprüche, wobei, wobei der Prüfalgorithmus auf dem Endgerät (400) und/oder auf dem Kommunikationspartner (300) ausgeführt wird.

15. Verfahren (100) nach einem der Ansprüche 2 bis 14, wobei beim Senden der Sicherheitsinformationen und Identitätsinformationen von dem Kommunikationspartner (300) an das Back-End (400), der Kommunikationspartner (300) Zusatzinformationen mitschickt, wobei die Zusatzinformationen eine Nutzerinformation umfasst.

16. Verfahren (100) nach einem der vorhergehenden Ansprüche, wobei der erste öffentliche Schlüssel beim Senden der Datenstruktur mit gesendet wird.

17. Verfahren (100) nach einem der Ansprüche 1 bis 15, wobei der öffentliche Schlüssel zu einem früheren Zeitpunkt dem Endgerät (400) bereitgestellt wird, wobei der frühere Zeitpunkt der Fertigungszeitpunkt des Endgerätes (400) ist.

18. Verfahren (100) nach einem der vorhergehenden Ansprüche, wobei der öffentliche Schlüssel vor Veränderung auf dem Endgerät (400) geschützt ist.

19. Verfahren (100) nach einem der vorhergehenden Ansprüche, wobei der erste private Schlüssel ein Geheimnis ist, das dem Back-End (200) bekannt ist, wobei das Geheimnis ausschließlich dem Back-End (200) bekannt ist.

20. Verfahren (100) nach einem der vorhergehenden Ansprüche, wobei das Endgerät (400) nur über sicherheitsunkritische Informationen verfügt.

21. Verfahren (100) nach einem der vorhergehenden Ansprüche, wobei der sichere Kommunikationskanal mittels eines symmetrischen Verfahrens erzeugt wird, oder der sichere Kommunikationskanal mittels eines asymmetrischen Verfahrens erzeugt wird, wobei das asymmetrisches Verfahren ein digitales Zertifikat verwendet.

22. Verfahren (100) nach einem der Ansprüche 4 bis 21, wobei das Signal von dem Back-End (200) oder einem weiteren Kommunikationspartner ausgewertet wird.

23. Verfahren (100) nach einem der vorhergehenden Ansprüche, wobei der erste öffentliche Schlüssel durch den Kommunikationspartner geprüft wird, bevor der erste öffentliche Schlüssel an das Endgerät weitergeleitet wird, wobei der öffentliche Schlüssel ein Zertifikat ist, wobei das Zertifikat gegen einen bekannten Austeller validiert wird, wobei das Validieren des Zertifikats eine Gültigkeit und/oder einen Rückweisungsstatus umfassen.

24. Back-End (200) aufweisend
- eine erste Kryptographieeinrichtung (205);
- eine Erzeugungseinrichtung (210) zum Erstellen einer Datenstruktur und einer ersten digitalen Signatur über die Datenstruktur mittels der ersten Kryptographieeinrichtung (205) und einem ersten privaten Schlüssel, wobei die erste digitale Signatur mit einem ersten öffentlichen Schlüssel prüfbar ist;
- eine erste Kommunikationseinrichtung (215), die mittels eines ersten Prozessors programmiert ist
- zum Senden der Datenstruktur und der ersten digitalen Signatur an ein Endgerät (400);
- zum Aufbau eines sicheren Kommunikationskanals mit einem Kommunikationspartner (300) mittels eines Kommunikationsprotokolls unter Verwendung der ersten Kryptographieeinrichtung (205), wobei jeweils eine Kanalbindungsinformation durch das Kommunikationsprotokoll für das Back-End (200) und für den Kommunikationspartner (300) festgelegt wird,
**dadurch gekennzeichnet, dass**
- die Datenstruktur die Kanalbindungsinformation und/oder Basisinformationen vom Back-End (400) umfasst,
- der sichere Kommunikationskanal Sicherheitsanforderungen erfüllt, die vom Back-End (200) festgelegt werden, wobei das Endgerät (400) die erste Signatur prüft um festzustellen, ob der Kommunikationskanal wirklich den Sicherheitsanforderungen des Back-Ends (200) genügt.

25. Kommunikationspartner (300) aufweisend
- eine zweite Kryptographieeinrichtung (305);
- eine zweite Kommunikationseinrichtung (310), die mittels eines zweiten Prozessors programmiert ist
- zum Aufbau eines sicheren Kommunikationskanals mit einem Back-End (200) unter Verwendung der zweiten Kryptographieeinrichtung (305), wobei jeweils eine Kanalbindungsinformation durch das Kommunikationsprotokoll für das Back-End (200) und für den Kommunikationspartner (300) festgelegt werden,
- zum Aufbau eines Kommunikationskanals mit einem Endgerät (400), und
- zum Senden von der Kanalbindungsinformationen an das Endgerät (400),
**dadurch gekennzeichnet, dass**
- eine Datenstruktur des Back-Ends (400) die Kanalbindungsinformation und/oder Basisinformationen vom Back-End (400) umfasst,
- der sichere Kommunikationskanal Sicherheitsanforderungen erfüllt, die vom Back-End (200) festgelegt werden, wobei das Endgerät (400) eine durch das Back-End (200) erzeugte erste Signatur über die Datenstrukur prüft um festzustellen, ob der Kommunikationskanal wirklich den Sicherheitsanforderungen des Back-Ends (200) genügt.

26. Endgerät (400) aufweisend
- eine dritte Kommunikationseinrichtung (405), die mittels eines dritten Prozessors programmiert ist
- zum Aufbau eines Kommunikationskanals mit einem Kommunikationspartner (300),
- zum Empfang von den Kanalbindungsinformationen und/oder einer Datenstruktur und/oder einer ersten digitalen Signatur und/oder eines öffentlichen Schlüssels, wobei die erste digitale Signatur über die Datenstruktur durch das Back-End (200) mit einem ersten privaten Schlüssel erzeugt wurde;
- eine Prüfeinrichtung (410) zum Prüfen einer Authentizität der Datenstruktur mittels eines Prüfalgorithmus unter Verwendung der ersten digitalen Signatur und des öffentlichen Schlüssels;
- ein Speicher (415) zum Speichern der Kanalbindungsinformationen und/oder der Datenstruktur und/oder der ersten digitalen Signatur und/oder des ersten öffentlichen Schlüssels
**dadurch gekennzeichnet, dass**
- die Datenstruktur die Kanalbindungsinformation und/oder Basisinformationen vom Back-End (400) umfasst,
- der Prüfalgorithmus zum Feststellen der Authentizität zusätzlich die gespeicherte Kanalbindungsinformation und die Kanalbindungsinformation prüft,
- der sichere Kommunikationskanal Sicherheitsanforderungen erfüllt, die vom Back-End (200) festgelegt werden, wobei das Endgerät (400) die erste Signatur prüft um festzustellen, ob der Kommunikationskanal wirklich den Sicherheitsanforderungen des Back-Ends (200) genügt.

27. System (500), aufweisend:
- ein Back-End (200) mit
- einer ersten Kryptographieeinrichtung (205);
- einer Erzeugungseinrichtung (210) zum Erstellen einer Datenstruktur und einer ersten digitalen Signatur über die Datenstruktur mittels der ersten Kryptographieeinrichtung (205) und einem ersten privaten Schlüssel, wobei die erste digitale Signatur mit einem ersten öffentlichen Schlüssel prüfbar ist;
- einer ersten Kommunikationseinrichtung (215), die mittels eines ersten Prozessors programmiert ist
- zum Senden der Datenstruktur und der ersten digitalen Signatur an ein Endgerät (400);
- zum Aufbau eines sicheren Kommunikationskanals mit einem Kommunikationspartner (300) mittels eines Kommunikationsprotokolls unter Verwendung der ersten Kryptographieeinrichtung (205), wobei jeweils eine Kanalbindungsinformation durch das Kommunikationsprotokoll für das Back-End (200) und für den Kommunikationspartner (300) festgelegt wird;
- den Kommunikationspartner (300) mit
- einer zweiten Kryptographieeinrichtung (305);
- einer zweiten Kommunikationseinrichtung (310), die mittels eines zweiten Prozessors programmiert ist
- zum Aufbau des sicheren Kommunikationskanals mit dem Back-End (200) unter Verwendung der zweiten Kryptographieeinrichtung (305),
- zum Aufbau eines Kommunikationskanals mit dem Endgerät (400), und
- zum Senden der Kanalbindungsinformationen an das Endgerät (400);
- das Endgerät (400) mit
- einer dritten Kommunikationseinrichtung (405), die mittels eines dritten Prozessors programmiert ist
- zum Aufbau des Kommunikationskanals mit dem Kommunikationspartner (300),
- zum Empfang der Kanalbindungsinformationen und/oder der Datenstruktur und/oder der ersten digitalen Signatur und/oder des öffentlichen Schlüssels;
- einer Prüfeinrichtung (410) zum Prüfen einer Authentizität der Datenstruktur mittels eines Prüfalgorithmus unter Verwendung der ersten digitalen Signatur und des öffentlichen Schlüssels;
- einem Speicher (415) zum Speichern der Kanalbindungsinformationen und/oder der Datenstruktur und/oder der ersten digitalen Signatur und/oder des ersten öffentlichen Schlüssels
**dadurch gekennzeichnet, dass**
- die Datenstruktur die Kanalbindungsinformation und/oder Basisinformationen vom Back-End (400) umfasst,
- der Prüfalgorithmus zum Feststellen der Authentizität zusätzlich die gespeicherte Kanalbindungsinformation und die Kanalbindungsinformation prüft,
- der sichere Kommunikationskanal Sicherheitsanforderungen erfüllt, die vom Back-End (200) festgelegt werden, wobei das Endgerät (400) die erste Signatur prüft um festzustellen, ob der Kommunikationskanal wirklich den Sicherheitsanforderungen des Back-Ends (200) genügt.

28. System (500) nach Anspruch 27, wobei das System ein virtualisiertes System ist.

29. Computerprogrammprodukt mit Programmbefehlen, welche, wenn die Befehle von einem Computer ausgeführt werden, den Computer veranlassen, alle Verfahrensschritte des Verfahrens nach einem der Ansprüche 1-23 auszuführen.

30. Bereitstellungsvorrichtung für das Computerprogrammprodukt nach Anspruch 29, wobei die Bereitstellungsvorrichtung das Computerprogrammprodukt speichert und/oder bereitstellt.

## Claims

1. Method (100) for producing a secure communication channel for a terminal (400), the method having the following method steps of:
- setting up (105) a secure communication channel between a communication partner (300) and a backend (200) by means of a communication protocol, an item of channel binding information respectively being stipulated for the backend (200) and for the communication partner (300) by the communication protocol;
- producing (110) a communication channel between the communication partner (300) and the terminal (400);
- transmitting (115) the channel binding information relating to the secure communication channel to the terminal (400) by means of the communication partner (300);
- storing (120) the channel binding information on the terminal (400);
- creating (125) a data structure and a first digital signature across the data structure by means of the backend (200) using a first private key, the digital signature being able to be checked using a first public key;
- sending (130) the data structure and the digital signature from the backend (200) to the terminal (400); and
- checking (135) authenticity of the data structure using a checking algorithm for verifying the digital signature using the public key by means of the terminal (400) and/or by means of the communication partner (300), **characterized in that**
- the data structure comprises the channel binding information and/or basic information from the backend (200),
- the checking algorithm additionally checks the stored channel binding information and the channel binding information in order to determine the authenticity,
- the secure communication channel meets security requirements stipulated by the backend (200), the terminal (400) checking the first signature in order to determine whether the communication channel actually meets the security requirements of the backend (200).

2. Method (100) according to Claim 1, the method having an additional method step for sending security information or/and identity information from the terminal (400) to the backend (200) via the communication partner (300).

3. Method (100) according to Claim 1 or 2, the method having the following method steps of:
- sending (121) the security information and identity information relating to the terminal (400) from the terminal (400) to the communication partner (300);
- sending (122) the security information and identity information relating to the terminal (400) from the communication partner (300) to the backend (200) via the secure communication channel.

4. Method (100) according to one of the preceding claims, a signal being provided (140) by the terminal (400) and/or by the communication partner (300) if the checking algorithm determines invalid authenticity.

5. Method (100) according to one of the preceding claims, the first public key being provided for the terminal (400), a certification authority or the backend (200) providing the first public key.

6. Method (100) according to one of Claims 3 to 5, the basic information from the backend (200) comprising an item of configuration information, the configuration information comprising an item of license information and/or program code for executing a command which is executed by the terminal (400) on the terminal (400).

7. Method (100) according to one of Claims 2 to 6, the terminal (400) having a second key pair in the form of a second public key and a second private key, which key pair is used to generate a second digital signature for the security information from the terminal (400).

8. Method (100) according to Claim 7, the communication partner (300) checking second authenticity of the security information using the second public key.

9. Method (100) according to one of Claims 2 to 8, the security information having a nonce and/or an identifier of a certificate of the terminal and/or only a fingerprint of the second public key.

10. Method (100) according to one of Claims 2 to 8, the security information and/or the channel binding information and/or the identity information being completely or partially included in the first digital signature.

11. Method (100) according to one of the preceding claims, the data structure and/or the first digital signature comprising an item of legitimacy information which causes the terminal (400) to switch on particular programming.

12. Method (100) according to one of the preceding claims, the data structure being expanded with the first digital signature.

13. Method (100) according to one of Claims 2 to 12, the data structure additionally comprising the security information and/or identity information from the terminal (400).

14. Method (100) according to one of the preceding claims, the checking algorithm being executed on the terminal (400) and/or on the communication partner (300).

15. Method (100) according to one of Claims 2 to 14, the communication partner (300) concomitantly sending additional information during the sending of the security information and identity information from the communication partner (300) to the backend (200), the additional information comprising an item of user information.

16. Method (100) according to one of the preceding claims, the first public key being concomitantly sent during the sending of the data structure.

17. Method (100) according to one of Claims 1 to 15, the public key being made available to the terminal (400) at an earlier time, the earlier time being the manufacturing time of the terminal (400).

18. Method (100) according to one of the preceding claims, the public key being protected from being changed on the terminal (400).

19. Method (100) according to one of the preceding claims, the first private key being a secret which is known to the backend (200), the secret being known exclusively to the backend (200).

20. Method (100) according to one of the preceding claims, the terminal (400) having only non-security-critical information.

21. Method (100) according to one of the preceding claims, the secure communication channel being produced by means of a symmetrical method, or the secure communication channel being produced by means of an asymmetrical method, the asymmetrical method using a digital certificate.

22. Method (100) according to one of Claims 4 to 21, the signal being evaluated by the backend (200) or a further communication partner.

23. Method (100) according to one of the preceding claims, the first public key being checked by the communication partner before the first public key is forwarded to the terminal, the public key being a certificate, the certificate being validated against a known issuer, the validation of the certificate comprising a validity and/or a rejection status.

24. Backend (200) having
- a first cryptography device (205);
- a production device (210) for creating a data structure and a first digital signature across the data structure using the first cryptography device (205) and a first private key, the first digital signature being able to be checked using a first public key;
- a first communication device (215) which is programmed by means of a first processor
- to send the data structure and the first digital signature to a terminal (400);
- to set up a secure communication channel to a communication partner (300) by means of a communication protocol using the first cryptography device (205), an item of channel binding information respectively being stipulated by the communication protocol for the backend (200) and for the communication partner (300),
**characterized in that**
- the data structure comprises the channel binding information and/or basic information from the backend (200),
the checking algorithm additionally checks the stored channel binding information and the channel binding information in order to determine the authenticity,
- the secure communication channel meets security requirements stipulated by the backend (200), the terminal (400) checking, , the first signature in order to determine whether the communication channel actually meets the security requirements of the backend (200).

25. Communication partner (300) having
- a second cryptography device (305);
- a second communication device (310) which is programmed by means of a second processor
- to set up a secure communication channel to a backend (200) using the second cryptography device (305), an item of channel binding information respectively being stipulated by the communication protocol for the backend (200) and for the communication partner (300),
- to set up a communication channel to a terminal (400), and
- to send the channel binding information to the terminal (400)
**characterized in that**
- a data structure of the backend (200) comprises the channel binding information and/or basic information from the backend (200),
- the secure communication channel meets security requirements stipulated by the backend (200), the terminal (400) checking a first signature produced by the backend (200) via the data structure in order to determine whether the communication channel actually meets the security requirement of the backend (200).

26. Terminal (400) having
- a third communication device (405) which is programmed by means of a third processor
- to set up a communication channel to a communication partner (300),
- to receive the channel binding information and/or a data structure and/or a first digital signature and/or a public key, the first digital signature having been produced across the data structure by means of the backend (200) using a first private key;
- a checking device (410) for checking authenticity of the data structure by means of a checking algorithm using the first digital signature and the public key;
- a memory (415) for storing the channel binding information and/or the data structure and/or the first digital signature and/or the first public key, **characterized in that**
- the data structure comprises the channel binding information and/or basic information from the backend (200),
- the checking algorithm additionally checks the stored channel binding information and the channel binding information in order to determine the authenticity,
- the secure communication channel meets security requirements stipulated by the backend (200), the terminal (400) checking the first signature in order to determine whether the communication channel actually meets the security requirements of the backend (200).

27. System (500) having:
- a backend (200) having
- a first cryptography device (205);
- a production device (210) for creating a data structure and a first digital signature across the data structure using the first cryptography device (205) and a first private key, the first digital signature being able to be checked using a first public key;
- a first communication device (215) which is programmed by means of a first processor
- to send the data structure and the first digital signature to a terminal (400);
- to set up a secure communication channel to a communication partner (300) by means of a communication protocol using the first cryptography device (205), an item of channel binding information respectively being stipulated by the communication protocol for the backend (200) and for the communication partner (300);
- the communication partner (300) having
- a second cryptography device (305);
- a second communication device (310) which is programmed by means of a second processor
- to set up the secure communication channel to the backend (200) using the second cryptography device (305),
- to set up a communication channel to the terminal (400), and
- to send the channel binding information to the terminal (400) ;
- the terminal (400) having
- a third communication device (405) which is programmed by means of a third processor
- to set up the communication channel to the communication partner (300),
- to receive the channel binding information and/or the data structure and/or the first digital signature and/or the public key;
- a checking device (410) for checking authenticity of the data structure by means of a checking algorithm using the first digital signature and the public key;
- a memory (415) for storing the channel binding information and/or the data structure and/or the first digital signature and/or the first public key, **characterized in that**
- the data structure comprises the channel binding information and/or basic information from the backend (200),
- the checking algorithm additionally checks the stored channel binding information and the channel binding information in order to determine the authenticity,
- the secure communication channel meets security requirements stipulated by the backend (200), the terminal (400) checking the first signature in order to determine whether the communication channel actually meets the security requirements of the backend (200).

28. System (500) according to Claim 27, the system being a virtualized system.

29. Computer program product having program instructions which, when the instructions are carried out by a computer, cause the computer to carry out all method steps of the method according to one of Claims 1-23.

30. Provision apparatus for the computer program product according to Claim 29, the provision apparatus storing and/or providing the computer program product.

## Revendications

1. Procédé (100) pour créer un canal de communication sûr pour un terminal (400), le procédé comportant les étapes suivantes :
- établissement (105) d'un canal de communication sûr au moyen d'un protocole de communication entre un partenaire de communication (300) et un back-end (200), une information de liaison au canal étant déterminée par le protocole de communication respectivement pour le back-end (200) et pour le partenaire de communication (300) ;
- création (110) d'un canal de communication entre le partenaire de communication (300) et le terminal (400) ;
- transmission (115) de l'information de liaison au canal concernant le canal de communication sûr par le partenaire de communication (300) au terminal (400) ;
- stockage (120) de l'information de liaison au canal sur le terminal (400) ;
- création (125) d'une structure de données et d'une première signature numérique relative à la structure de données par le back-end (200) avec une première clé privée, la signature numérique pouvant être vérifiée avec une première clé publique ;
- envoi (130) de la structure de données et de la signature numérique du back-end (200) au terminal (400) ; et
- contrôle (135) d'une authenticité de la structure de données au moyen d'un algorithme de contrôle pour la vérification de la signature numérique au moyen de la clé publique par le terminal (400) et/ou par le partenaire de communication (300),
**caractérisé en ce que**
- la structure de données comprend l'information de liaison au canal et/ou des informations de base du back-end (400) ;
- l'algorithme de contrôle vérifie additionnellement, pour constater l'authenticité, l'information de liaison au canal stockée et l'information de liaison au canal ;
- le canal de communication sûr remplit des exigences de sécurité qui sont fixées par le back-end (200), le terminal (400) vérifiant la première signature pour constater si le canal de communication remplit réellement les exigences de sécurité du back-end (200).

2. Procédé (100) selon la revendication 1, le procédé comportant une étape supplémentaire pour envoyer des informations de sécurité ou/et des informations d'identité du terminal (400) au back-end (200) via le partenaire de communication (300).

3. Procédé (100) selon la revendication 1 ou 2, le procédé comportant les étapes suivantes :
- envoi (121) des informations de sécurité et des informations d'identité du terminal (400) du terminal (400) au partenaire de communication (300) ;
- envoi (122) des informations de sécurité et des informations d'identité du terminal (400) du partenaire de communication (300) au back-end (200) via le canal de communication sûr.

4. Procédé (100) selon l'une des revendications précédentes, un signal étant fourni (140) par le terminal (400) et/ou par le partenaire de communication (300) si l'algorithme de contrôle constate une authenticité non valable.

5. Procédé (100) selon l'une des revendications précédentes, la première clé publique étant fournie pour le terminal (400), un poste de certification ou le back-end (200) fournissant la première clé publique.

6. Procédé (100) selon l'une des revendications 3 à 5, les informations de base du back-end (200) incluant une information de configuration, l'information de configuration incluant une information de licence et/ou un code de programme pour l'exécution d'une commande exécutée par le terminal (400) sur le terminal (400).

7. Procédé (100) selon l'une des revendications 2 à 6, le terminal (400) disposant d'une deuxième paire de clés sous la forme d'une deuxième clé publique et d'une deuxième clé privée permettant au terminal (400) de générer une deuxième signature numérique pour les informations de sécurité.

8. Procédé (100) selon la revendication 7, le partenaire de communication (300) vérifiant une deuxième authenticité de l'information de sécurité au moyen de la deuxième clé publique.

9. Procédé (100) selon l'une des revendications 2 à 8, l'information de sécurité comportant un nonce et/ou un identifiant d'un certificat du terminal et/ou uniquement une empreinte digitale de la deuxième clé publique.

10. Procédé (100) selon l'une des revendications 2 à 8, l'information de sécurité et/ou l'information de liaison au canal et/ou les informations d'identité étant entièrement ou partiellement prises en compte dans la première signature numérique.

11. Procédé (100) selon l'une des revendications précédentes, la structure de données et/ou la première signature numérique comprenant une information de légitimité qui fait en sorte que le terminal (400) lance une programmation déterminée.

12. Procédé (100) selon l'une des revendications précédentes, la structure de données étant élargie par la première signature numérique.

13. Procédé (100) selon l'une des revendications 2 à 12, la structure de données comprenant additionnellement les informations de sécurité et/ou les informations d'identité du terminal (400).

14. Procédé (100) selon l'une des revendications précédentes, l'algorithme de contrôle étant exécuté sur le terminal (400) et/ou sur le partenaire de communication (300).

15. Procédé (100) selon l'une des revendications 2 à 14, le partenaire de communication (300) envoyant des informations supplémentaires lors de l'envoi des informations de sécurité et des informations d'identité du partenaire de communication (300) au back-end (400), les informations supplémentaires incluant une information d'utilisateur.

16. Procédé (100) selon l'une des revendications précédentes, la première clé publique étant envoyée lors de l'envoi de la structure de données.

17. Procédé (100) selon l'une des revendications 1 à 15, la clé publique étant fournie au terminal (400) à un instant antérieur, l'instant antérieur étant le moment de la fabrication du terminal (400).

18. Procédé (100) selon l'une des revendications précédentes, la clé publique étant protégée contre une modification sur le terminal (400).

19. Procédé (100) selon l'une des revendications précédentes, la première clé privée étant un secret connu du back-end (200), le secret étant connu uniquement du back-end (200).

20. Procédé (100) selon l'une des revendications précédentes, le terminal (400) ne disposant que d'informations non critiques en termes de sécurité.

21. Procédé (100) selon l'une des revendications précédentes, le canal de communication sûr étant créé au moyen d'un procédé symétrique ou le canal de communication sûr étant créé au moyen d'un procédé asymétrique, le procédé asymétrique utilisant un certificat numérique.

22. Procédé (100) selon l'une des revendications 4 à 21, le signal étant évalué par le back-end (200) ou par un autre partenaire de communication.

23. Procédé (100) selon l'une des revendications précédentes, la première clé publique étant vérifiée par le partenaire de communication avant sa retransmission au terminal, la clé publique étant un certificat, le certificat étant validé contre un délivreur connu, la validation du certificat incluant une validité et/ou un statut de rejet.

24. Back-end (200) comprenant :
- un premier dispositif de cryptographie (205) ;
- un dispositif de génération (210) pour créer une structure de données et une première signature numérique relative à la structure de données au moyen du premier dispositif de cryptographie (205) et d'une première clé privée, la première signature numérique pouvant être vérifiée avec une première clé publique ;
- un premier dispositif de communication (215) qui est programmé au moyen d'un premier processeur
-- pour envoyer la structure de données et la première signature numérique à un terminal (400) ;
-- pour établir un canal de communication sûr avec un partenaire de communication (300) au moyen d'un protocole de communication avec utilisation du premier dispositif de cryptographie (205), une information de liaison au canal étant déterminée par le protocole de communication respectivement pour le back-end (200) et pour le partenaire de communication (300),
**caractérisé en ce que**
- la structure de données inclut l'information de liaison au canal et/ou des informations de base du back-end (400) ;
- le canal de communication sûr remplit des exigences de sécurité qui sont fixées par le back-end (200), le terminal (400) vérifiant la première signature pour constater si le canal de communication remplit réellement les exigences de sécurité du back-end (200).

25. Partenaire de communication (300) comprenant :
- un deuxième dispositif de cryptographie (305) ;
- un deuxième dispositif de communication (310) qui est programmé au moyen d'un deuxième processeur
-- pour établir un canal de communication sûr avec un back-end (200) en utilisant le deuxième dispositif de cryptographie (305), une information de liaison au canal étant déterminée par le protocole de communication respectivement pour le back-end (200) et pour le partenaire de communication (300) ;
-- pour établir un canal de communication avec un terminal (400) ; et
-- pour envoyer les informations de liaison au canal au terminal (400),
**caractérisé en ce que**
- une structure de données du back-end (400) inclut l'information de liaison au canal et/ou des informations de base du back-end (400) ;
- le canal de communication sûr remplit des exigences de sécurité qui sont fixées par le back-end (200), le terminal (400) vérifiant une première signature relative à la structure de données et créée par le back-end (200) pour constater si le canal de communication remplit réellement les exigences de sécurité du back-end (200).

26. Terminal (400) comprenant :
- un troisième dispositif de communication (405) qui est programmé au moyen d'un troisième processeur
-- pour établir un canal de communication avec un partenaire de communication (300) ;
-- pour recevoir les informations de liaison au canal et/ou une structure de données et/ou une première signature numérique et/ou une clé publique, la première signature numérique relative à la structure de données ayant été créée par le back-end (200) avec une première clé privée ;
- un dispositif de contrôle (410) pour vérifier une authenticité de la structure de données au moyen d'un algorithme de contrôle en utilisant la première signature numérique et la clé publique ;
- une mémoire (415) pour stocker les informations de liaison au canal et/ou la structure de données et/ou la première signature numérique et/ou la première clé publique,
**caractérisé en ce que**
- la structure de données inclut l'information de liaison au canal et/ou des informations de base du back-end (400) ;
- l'algorithme de contrôle vérifie additionnellement, pour constater l'authenticité, l'information de liaison au canal stockée et l'information de liaison au canal ;
- le canal de communication sûr remplit des exigences de sécurité qui sont fixées par le back-end (200), le terminal (400) vérifiant la première signature pour constater si le canal de communication remplit réellement les exigences de sécurité du back-end (200).

27. Système (500) comprenant :
- un back-end (200) avec
-- un premier dispositif de cryptographie (205) ;
-- un dispositif de génération (210) pour créer une structure de données et une première signature numérique relative à la structure de données au moyen du premier dispositif de cryptographie (205) et d'une première clé privée, la première signature numérique pouvant être vérifiée avec une première clé publique ;
-- un premier dispositif de communication (215) qui est programmé au moyen d'un premier processeur
--- pour envoyer la structure de données et la première signature numérique à un terminal (400) ;
--- pour établir un canal de communication sûr avec un partenaire de communication (300) au moyen d'un protocole de communication en utilisant le premier dispositif de cryptographie (205), une information de liaison au canal étant déterminée par le protocole de communication respectivement pour le back-end (200) et pour le partenaire de communication (300) ;
- le partenaire de communication (300) avec
-- un deuxième dispositif de cryptographie (305) ;
-- un deuxième dispositif de communication (310) qui est programmé au moyen d'un deuxième processeur
--- pour établir le canal de communication sûr avec le back-end (200) en utilisant le deuxième dispositif de cryptographie (305) ;
--- pour établir un canal de communication avec le terminal (400) ; et
--- pour envoyer les informations de liaison au canal au terminal (400) ;
- le terminal (400) avec
-- un troisième dispositif de communication (405) qui est programmé au moyen d'un troisième processeur
--- pour établir le canal de communication avec le partenaire de communication (300) ;
--- pour recevoir les informations de liaison au canal et/ou la structure de données et/ou la première signature numérique et/ou la clé publique ;
-- un dispositif de contrôle (410) pour vérifier une authenticité de la structure de données au moyen d'un algorithme de contrôle en utilisant la première signature numérique et la clé publique ;
-- une mémoire (415) pour stocker les informations de liaison au canal et/ou la structure de données et/ou la première signature numérique et/ou la première clé publique,
**caractérisé en ce que**
- la structure de données inclut l'information de liaison au canal et/ou des informations de base du back-end (400) ;
- l'algorithme de contrôle vérifie additionnellement, pour constater l'authenticité, l'information de liaison au canal stockée et l'information de liaison au canal ;
- le canal de communication sûr remplit des exigences de sécurité qui sont fixées par le back-end (200), le terminal (400) vérifiant la première signature pour constater si le canal de communication remplit réellement les exigences de sécurité du back-end (200).

28. Système (500) selon la revendication 27, le système étant un système virtualisé.

29. Produit de programme informatique comportant instructions de programme qui font en sorte que, lorsque les instructions sont exécutées par un ordinateur, l'ordinateur exécute toutes les étapes du procédé selon l'une des revendications 1 à 23.

30. Dispositif de mise à disposition pour le produit de programme informatique selon la revendication 29, le dispositif de mise à disposition sauvegardant et/ou fournissant le produit de programme informatique.
